(19) **Europäisches Patentamt**

**European Patent Office**

**Office européen des brevets**

(11) **EP 0 666 246 B1**

(12) **EUROPEAN PATENT SPECIFICATION**

(45) Date of publication and mention
of the grant of the patent:
**08.04.1998 Bulletin 1998/15**

(51) Int. Cl.$^6$: **C04B 35/594**

(21) Application number: **95101096.6**

(22) Date of filing: **27.01.1995**

(54) **Silicon nitride based sintered product**

Sinterprodukt auf Siliciumnitridbasis

Produit fritté basé sur nitrure de silicium

(84) Designated Contracting States:
**DE FR GB**

(30) Priority: **07.02.1994 JP 33288/94**
**02.08.1994 JP 200079/94**
**19.12.1994 JP 334514/94**

(43) Date of publication of application:
**09.08.1995 Bulletin 1995/32**

(73) Proprietor:
**Isuzu Ceramics Research Institute Co., Ltd.**
**Fujisawa-shi, Kanagawa-ken, 252 (JP)**

(72) Inventors:
• **Kita, Hideki**
**Kanagawa-ken, 251 (JP)**

• **Tseng, Wenjea J.**
**Kanagawa-ken, 242 (JP)**
• **Yamada, Toshiyuki**
**Kanagawa-ken, 242 (JP)**

(74) Representative:
**Niedmers, Ole, Dipl.-Phys.**
**Patentanwälte**
**Niedmers & Partner**
**Stahltwiete 23**
**22761 Hamburg (DE)**

(56) References cited:
**WO-A-82/04245**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.15.12/3.4

**Description**

DETAILED DESCRIPTION OF THE INVENTION

Industrial Applicability

The present invention relates to a silicon nitride based sintered product made by reactive sintering, particularly to a silicon nitride based sintered product whose tissue is fine or minute and mechanical strength is high.

Prior Art

As disclosed in Japanese Patent Application Laid-Open No. 14635/1981, there is a method of producing a high-density silicon nitride based sintered product, comprising: obtaining a calcinated product by adding to a Si (silicon) powder, at least one powder of metal or oxides thereof selected out of Fe (iron), Co (cobalt), Ni (nickel), Mn (manganese), W (tungsten), Mo (molybdenum), Ti (titanium), Al (aluminum), Mg (magnesium) and Zr (zirconium), and being calcinated under the atmosphere of nitrogen at a temperature of 1300 to 1550° C, dipping a calcinated product into a solution containing said metal, and then again sintering it while supplying a silicon-contained vapor at a temperature of 1350 to 1550° C.

When the molded product is sintered by the aforementioned method, the added metal or the oxides thereof become a liquid phase or/and gaseous phase while the sintering, and pores, inflations, cracks or the like occur within the obtained sintered product. Thus, this is not suitable for high-temperature sintering, particularly, for thick-wall products.

In Japanese Patent Application Laid-Open No. 127266/1985, there is disclosed a method of producing a silicon nitride based sintered product which comprises preparing a molded product from a mixture of Si (silicon) powder and SrZrO$_3$ (strontium zirconate) powder or powder of precursor thereof, nitriding the molded product, and thereafter heating it at a temperature of 1600° C or more to obtain the silicon nitride based sintered product.

When the silicon nitride based sintered product is prepared by the aforementioned producing method, the strontium zirconate added becomes decomposed, which is reacted with Si$_3$N$_4$ (silicon nitride) converted from silicon to produce pores, inflations, cracks or the like within the sintered product. Therefore, this method is not suitable for calcination of thick-wall products.

A method of producing a silicon nitride based sintered product disclosed in Japanese Patent Application Laid-Open No. 89462/1988 comprises preparing a raw material mixed powder by adding to and mixing with a silicon powder, an oxide of at least one kind of element selected from a group consisting of Periodic Table, Group IIA, Group IIIA, Zr (zirconium) and A1 (aluminum) and/or an oxide precursor, processing a molded product formed from mixed powders of the raw materials at a temperature, of from 1000 to 1500° C under the atmosphere of nitrogen of 10 atmospheric pressure or more, and then processing it at a temperature of from 1600 to 2200° C under the atmosphere of nitrogen of 1 atmospheric pressure or more.

A ceramic reactive sintered product disclosed in Japanese Patent Application Laid-Open No. 114169/1988 comprises a base portion of the ceramic reacted sintered product and a surface layer in which pores are impregnated with oxide sintering assistants or sintering aids.

A method of producing a silicon nitride based sintered product disclosed in Japanese Patent Application Laid-Open No. 52678/1989 comprises molding a molded product from a mixed powder comprising essentially 40 to 80 wt% of a silicon nitride powder, 20 to 45 wt% of a silicon powder, and 0.5 to 15 wt% of a compound of elements in Periodic Table Group IIIA, calcinating the molded product at a temperature of from 1150 to 1400° C under the atmosphere of nitrogen pressed to 2 to 10 atmospheric pressure to form the silicon into nitride, and thereafter re-calcinating it under the atmosphere of nitrogen at a temperature of from 1700 to 2100° C to provide a higher density.

There is a report relating to a method of producing a silicon nitride in which Si, Al$_2$O$_3$ (alumina), and Y$_2$O$_3$ (yttrium oxide) are used as main raw materials, a two-stage calcination in which an extremely fine amount of Fe (iron) is added to the main raw materials, which are reacted and sintered, after which it is calcinated under low pressure, is employed to thereby make a tissue of the silicon nitride having a degree of 96 wt% of relative density. However, the high strength as a silicon nitride based sintered product cannot be expected with a degree of 96 wt% of relative density.

Further, to apply the conventional silicon nitride based sintered product to members which require high bending strength and high thermal expansion such as a piston pin of the engine is unsuitable in terms of the strength and the thermal expansion coefficient. Silicon nitride prepared by reacting and sintering a Si powder as in prior art has a grain dimension of the order of a few μm, and an expensive Si powder having a high purity of Si is presently used.

Silicon nitride based sintered bodies prepared from powder mixtures of silicon nitride, silicon containing 1 % by weight of Fe, and sintering aids are known from WO-A-8204245.

Problem to be solved by the Invention

In view of the foregoing, it is an object of the present invention to provide, in order to solve the aforementioned problems, a silicon nitride based sintered product and method of producing the same, using an inexpensive Si powder which is not high in purity, a $Si_3N_4$ powder, an $Al_2O_3$ powder and a $Y_2O_3$ powder as raw materials, the sintered product having no presence of pores and remaining silicon, therefore, its tissue being fine and excellent in mechanical strength.

In the silicon nitride based sintered product according to the present invention, some pores remain in the silicon nitride based sintered product. However, the pore size (inside diameter of the pore) is very small and a sufficient strength is obtained, thus it is possible to obtain a silicon nitride based sintered product at low cost. This silicon nitride based sintered product further increases in its strength if it is calcinated under low pressure after reacting and sintering.

A molded product is prepared from a mixture of an inexpensive Si (silicon) as raw material containing Fe (iron) as impurity, $Si_3N_4$ (nitride silicon), an assistant component effective for sintering silicon nitride, and AlN (aluminum nitride). The molded product is heated under the atmosphere containing nitrogen component whereby silicon is converted into silicon nitride, which is further heated to sinter the silicon nitride, thus obtained a silicon nitride based sintered product being free from pores or remaining silicon and having fine tissue and high strength.

By adding to finely pulverized silicon, a raw material effective for forming Si into $Si_3N_4$ and for producing $\alpha$ phase silicon nitride in conversion, it is possible to obtain a silicon nitride based sintered product having a high strength and fine or minute tissue which is free from problem in pores and remaining silicon, which pose a drawback of a silicon nitride based sintered product using silicon as a raw material, that is, which has no remaining silicon and in which Fe component is evenly dispersed, for the following reasons:

(a) The pore size (5 $\mu$m of inside diameter of the pore) in the molded product becomes small, and the inside diameter of the pore in the silicon nitride based sintered product becomes also small.
(b) Fe component contained in the raw material of Si makes the nitriding of silicon smooth and reduces an amount of the remaining silicon.
(c) The grain diameter of the Fe compound grain becomes small, and the Fe compound grains are evenly dispersed into the silicon nitride based sintered product.
(d) ZnO (zinc oxide) added to the raw material of the molded product increases the amount of $\alpha$ phase silicon nitride produced when silicon is converted into silicon nitride to increase the strength of the silicon nitride based sintered product.
(e) AlN (aluminum nitride) is added to thereby change the structure of a grain boundary phase and also the chemical composition , and as a result, the tissue is changed.

EMBODIMENT

The silicon nitride based sintered product according to the present invention is characterized by the use of silicon raw material containing Fe as defined in claims 1 or 2. The silicon nitride based sintered product comprises compositions containing elements of Si, N, Al, O, Y, Zn (zinc) and Fe, and when weights in the raw materials containing said elements Si, $Si_3N_4$, $Al_2O_3$, $Y_2O_3$, oxides of Zn and Fe are a, b, c, d, e, and f, the following expressions are fulfilled:

$$6 \leqq 100(c+d+e)/(1.67a+b+c+d+e+f) \leqq 12.0 \qquad (3)$$

$$1 \leqq (c+d)/e$$

$$0.001 \leqq 100e/(1.67a+b+c+d+e+f) \leqq 7.5$$

$$0.02 \leqq 100f/(1.67a+b+c+d+e+f) \leqq 7.5$$

The above-described expressions (3) are obtained approximately from data (except data B1) shown in Table 1.

In the aforementioned composition of the silicon nitride based sintered product, at least one element selected out of Ca (calcium), Ni, Cu (copper), Cr (chrome), Co, Mg, Mn, Sn (tin), Ho (holmium), Cd (cadmium), and Pb (lead) may be added, in place of said Zn element.

Most of the Fe compound grains contained in the silicon nitride based sintered product have 0.5 $\mu$m or less of the grain diameter. In a Fe compound grain having 0.5 $\mu$m or more of a grain diameter contained in said silicon nitride based sintered product, an area occupied by the Fe compound grain in a two-dimensional range of 200 $\mu$m x 200 $\mu$m is 0.1 % or more, and an area occupied by cells (10 $\mu$m x 10 $\mu$m) obtained by equally longitudinally and laterally dividing the range of 200 x 200 $\mu$m into 20 is 15 % or less.

Table 1

| Sample No. | Raw Material Compound Ratio | | | | | Bending Strength (MPa) | Relative Porosity (%) |
|---|---|---|---|---|---|---|---|
| | Si | $Si_3N_4$ | $Al_2O_3$ | $Y_2O_3$ | ZnO | | |
| B1 | 59.2 | 30.9 | 3.89 | 6.49 | - | 525 | 0.9 |
| A1 | 59.2 | 30.9 | 3.89 | 6.49 | 1.29 | 845 | 0.11 |
| D1 | 59.2 | 30.9 | 4.30 | 6.00 | 1.29 | 852 | 0.08 |
| D2 | 59.2 | 30.9 | 3.89 | 6.49 | 3.89 | 907 | 0.02 |
| D3 | 59.2 | 30.9 | 4.13 | 6.25 | 3.89 | 897 | 0.13 |
| D4 | 59.2 | 30.9 | 3.89 | 6.49 | 6.49 | 838 | 0.15 |
| D5 | 59.2 | 30.9 | 3.89 | 6.49 | 10.21 | 781 | 0.20 |
| E1 | 70.5 | 13 | 3.89 | 6.49 | 3.89 | 715 | 0.35 |
| E2 | 78 | 39 | 3.89 | 6.49 | 3.89 | 899 | 0.09 |
| E3 | 15.7 | 104 | 3.89 | 6.49 | 3.89 | 775 | 0.19 |

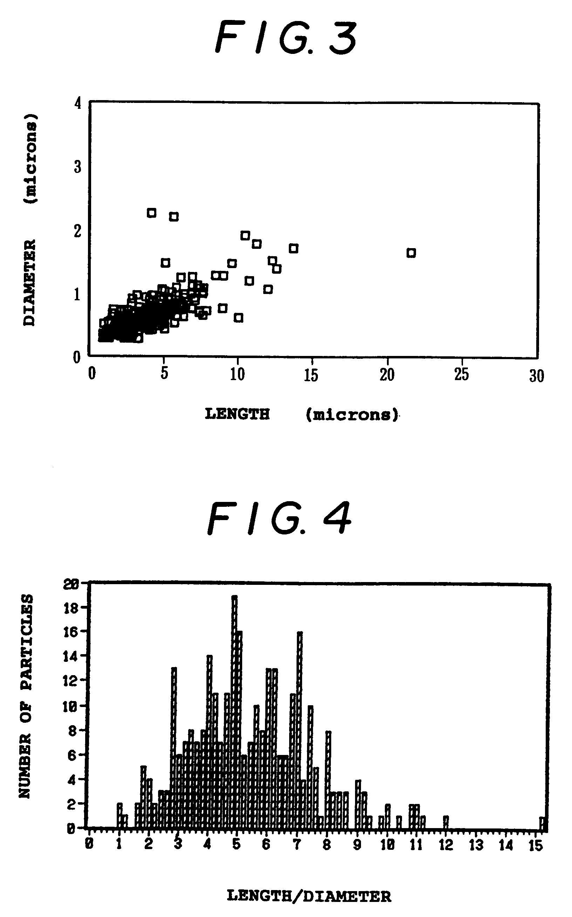

The silicon nitride based sintered product according to the present invention constitutes a very fine or minute tissue. The porosity of the silicon nitride based sintered product is 0.5 % or less, and a mean inside diameter of the pore is 2 $\mu$m or less. The silicon nitride contained in the silicon nitride based sintered product is present as the columnar grains, and according to the analyzing result, a diameter is 0.2 to 1.2 $\mu$m and a length is 7.5 $\mu$m or less for 80 % or more of the number of all the columnar grains as shown in Fig. 3. In other words, a value of length/diameter of each columnar grain is 1 to 20, a value of length/diameter of about 70 % or more of the number of all the columnar grains is 4.5 to 20, and more specifically, the value of length/diameter of about 50 % of the number of all the columnar grains is 4.5 to 10, as shown in Fig. 4.

To produce the silicon nitride based sintered product according to the present invention, a molded product is molded from powder of compositions or raw materials containing elements of Si, N, Al, O, Y, Zn and Fe and having a predetermined composition ratio. The molded product is heated at a temperature of 1700° C or less under the atmosphere containing nitrogen to convert Si into $Si_3N_4$, which is then calcinated at a temperature of 1700 to 2000° C.

The composition ratio of the compositions containing the elements of Si, N, Al, O, Y, Zn and Fe is predetermined in such a way that when weights in the raw materials Si, $Si_3N_4$, $Al_2O_3$, $Y_2O_3$, oxides or Zn and Fe are a, b, c, d, e and and f, the following expressions are fulfilled:

$$6.0 \leqq 100(c+d+e)/(1.67a+b+c+d+e+f) \leqq 12.0 \qquad (3a)$$

$$20 \leqq a/(a+b) \leqq 90$$

$$1 \leqq (c+d)/e$$

$$0.5 \leqq 100e/(a+b+c+d+e) \leqq 7.5$$

$$0.02 \leqq 100f/(1.67a+b+c+d+e+f) \leqq 7.5$$

The powder having the respective compositions used to prepare the molded product has a mean grain diameter of 1 $\mu$m or less (according to a laser diffraction method). The Si powder used to prepare said molded product includes 0.07 wt% (comparative) or more of Fe component as an impurity. One or more elements selected out of Ca, Ni, Cu, Cr, Co, Mg, Mn, Sn, Ho, Cd, and Pb can be used in place of said Zn element.

[EXAMPLE 1] (comparative)

59.2 parts (about 60 wt%) of silicon powder having 0.3 $\mu$m of a mean grain diameter containing 0.28 wt% of Fe, 30.9 parts of $\alpha$ phase silicon nitride powder having 0.3 $\mu$m of a mean grain diameter, 6.49 parts of $Y_2O_3$ powder having 0.1 $\mu$m of a mean grain diameter, 3.89 part of $Al_2O_3$ powder having 0.7 $\mu$m of a mean grain diameter, and 1.29 parts of ZnO powder having 1 μm of a mean grain diameter were put into a resin-made pot together with methanol, a dispersant and resin balls. The mixture was subjected to ball milling for 28 hours to prepare slurry having 0.5 μm of a mean grain diameter.

Thereafter, the slurry was dried and crushed to mold a plate-like product having 10 mm of length, 80 mm of wide and 5 mm of thickness by a uniaxial press machine. The plate-like product was CIP (cold isostatic press) processed under pressure of 2000 kgf/cm$^2$ to prepare a molded product. Thereafter, the molded product was first calcinated for 10 hours at a temperature of 1400° C under the atmosphere of nitrogen and pressure or 9.5 kgf/cm$^2$ and then calcinated for 5 hours at a temperature of 1900° C to obtain a silicon nitride based sintered product A1 (shown as an example of a typical composition ratio in Table 1).

As a Comparative Example, raw material different in impurity or silicon was used to prepare an molded product and sintered in a method similar to Example 1 (comparative) to prepare a number of sintered products B1 (shown as a typical example in Fig. 3).

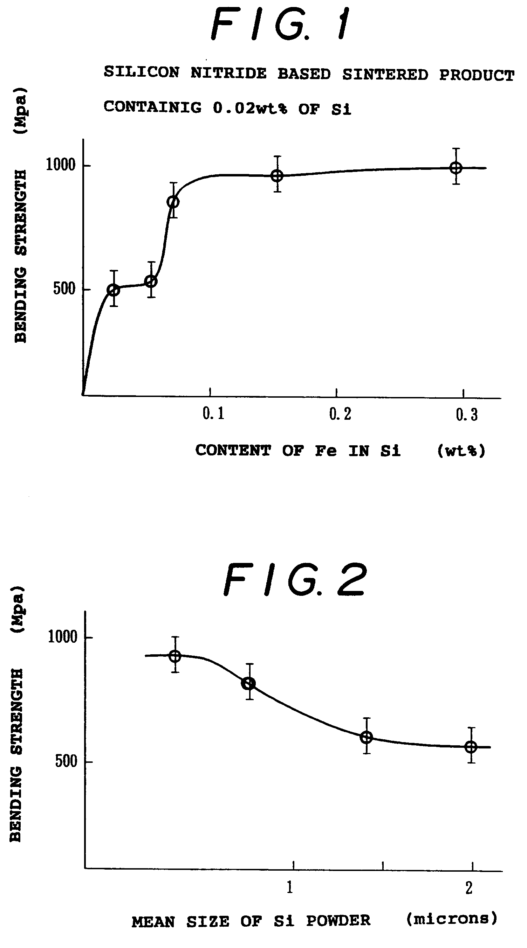

As shown in Table 1, with respect to the silicon nitride based sintered product A1 according to the present invention and the sintered product B1 according to the Comparative Example, anti-bending strength by 4-point bending (JIS R1601) was measured. As a result, it has been found that the bending strength of the silicon nitride based sintered product A1 according to the present invention was very excellent as compared with the sintered product B1 according to the Comparative Example. As shown in Fig. 1, when the amount of Fe contained in the raw material of the silicon nitride based sintered product is less than about 0.08 wt%, the bending strength of the silicon nitride based sintered product is reduced to one half, whereas when the amount of Fe contained in the raw material of the silicon nitride based sintered product is about 0.08 wt% or more, preferably, in excess of 0.1 wt%, the bending strength of the silicon nitride based sintered product is about 1000 MPa, which is very excellent.

Further, raw materials different in a mean grain diameter of silicon powder containing 0.28(± 0.02) wt% of Fe were used, and a number of silicon nitride based sintered products C0 were prepared from a molded product similar (the composition ratio is the same as that of the silicon nitride based sintered product A1) to that of Example 1 (comparative) in a manner similar to the above manner. As shown in Fig. 2, the bending strength with respect to the obtained silicon nitride based sintered products C0 was measured. As a result, it has been found that when a mean grain diameter of silicon powder containing 0.28(± 0.02) wt% of Fe was less than about 1 μm, a high bending strength was obtained, whereas when a mean grain diameter of silicon powder containing 0.28(± 0.02) wt% of Fe exceeded about 1 μm, the bending strength was not remarkable, as compared with that of well known silicon nitride based sintered products.

Furthermore, raw materials different in a mixing ratio between silicon and silicon nitride and amounts of addition of $Y_2O_3$, $Al_2O_3$ and ZnO were used, and silicon nitride based sintered products D1 to D5 and E1 to E3 were prepared from a molded product having compositions similar to that of Example 1 (comparative) in a manner similar to the above manner. As shown in Table 1, it has been found that the bending strength of the silicon nitride based sintered products D1 to D5 and E1 to E3 was greatly affected by the addition amount of ZnO.

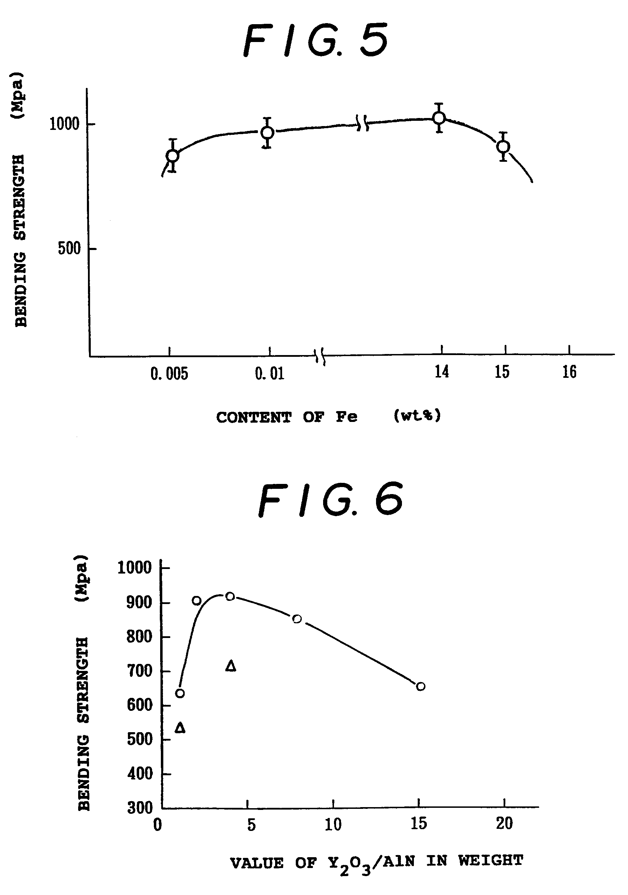

As shown in Fig. 5, it has been found that the bending strength of the silicon nitride based sintered products according to the present invention was about 1000 MPa, which is very excellent as compared with the sintered products of Comparative Examples. The bending strength of the silicon nitride based sintered product materially lowers when the amount of Fe contained in the raw material of the silicon nitride based sintered product is less than about 0.005 wt%, and also materially lowers even when the amount of Fe contained in the raw material of the silicon nitride based sintered product exceeds about 15 wt%.

Effect of the Invention

The silicon nitride based sintered product and method of producing the same according to the present invention are constructed and have the effects as follows: That is, since the silicon nitride based sintered product uses the Si powder and the $Si_3N_4$ powder, it is possible to obtain the silicon nitride based sintered product at a low cost. Since sintering aids or assistants as defined in the claims are used, and the rate of the assistant relative to the total weight is selected as defined in claims 1 or 2, it is possible to improve the relative density to obtain the silicon nitride based sintered product having a high strength. Since the Si powder having a low purity can be used, it is possible to reduce a material cost and a producing expense. In the first of the reactive sintering for the molded product formed of a mixture, thermal shrinkage is small, however, in the second step of heat treatment for the sintered product, it is possible to make pores of the sintered product small and to enhance the strength of the sintered product.

It is possible to obtain a silicon nitride based sintered product having a high strength by using inexpensive silicon powder containing a large amount of Fe, as main raw materials, that is generally considered as impurity.

Since the silicon nitride based sintered product according to the present invention use reactive sintering, and the shrinkage amount caused by the calcination of the silicon nitride based sintered product is 25 to 30 %. And the finished silicon nitride based sintered product is less deformed, the near-net properties (the mechanical properties are not sensitively changes due to the fine difference in the composition ratio) are excellent, and the production cost can be reduced.

According to the production method of the present invention, it is possible to produce the silicon nitride based sintered product excellent in the dimension stability and mechanical strength at less cost.

## BRIEF DESCRIPTION OF THE DRAWINGS

Fig. 1 is a diagram showing the relationship between amount of Fe contained in raw material of a silicon nitrid based sintered product and bending strength of a silicon nitride based sintered product.

Fig. 2 is a diagram showing the relationship between the grain size or grain diameter of Si powder as raw material of the silicon nitride based sintered product and bending strength of the silicon nitride based sintered product.

Fig. 3 is a diagram showing results analyzed the physical size of the columnar grains of the silicon nitride contained in the silicon nitride based sintered product.

Fig. 4 is a diagram showing results analyzed the columnar grains in the silicon nitride based sintered product.

Fig. 5 is a diagram showing the relationship between Fe component contained in the silicon of the raw materiale and bending strength of the silicon nitride based sintered product.

Fig. 6 is a diagram showing the relationship between value of $Y_2O_3/AlN$ of the raw materiale and bending strength of the silicon nitride based sintered product according to both the present invention and Comparative Examples.

## Claims

1. A silicon nitride based sintered product containing iron Fe, Yttrium Y and Aluminium Al, characterized in that 0.005 to 15 wt% of Fe compound grains of 0,2 $\mu$m or more of grain size, contained in the silicon nitride based sintered product, occupy 0,1 to 15 % of area in two-dimensional range of 200 x 200 $\mu$m, and said Fe compound grains occupy 0,1 to 15 % of area in cells (10 $\mu$m x 10 $\mu$m) obtained by equally longitudinally and laterally dividing said area 200 $\mu$m x 200 $\mu$m by 20, wherein a Fe content of $\leq$ 1 wt% in the Si powder raw material component is excluded, and said sintered product comprises additionally compositions containing elements of Si, N, Al, O, Y, Zn and Fe, and when weights of raw materials, containing said elements, of Si, $Si_3N_4$, $Al_2O_3$, $Y_2O_3$, oxides of Zn and Fe are a, b, c, d, e and f respectively, the following expressions are fulfilled:

$$6 \leq 100(c+d+e)/(1,67a+b+c+d+e+f) \leq 12,0$$

$$1 \leq (c+d)/e$$

$$0,001 \leq 100e/(1,67a+b+c+d+e+f) \leq 7,5$$

$$0,02 \leq 100f/(1,67a+b+c+d+e+f) \leq 7,5$$

2. A silicon nitride based sintered product containing iron Fe, Yttrium Y and Aluminium Al, characterized in that 0.005 to 15 wt% of Fe compound grains with a grain size of more than 80 % of the total number of the compound grains containing Fe component is 0,2 to 4 $\mu$m, and an area of 35 % or less is occupied by said compound grains containing the Fe component in more than 80 % of cells (10 $\mu$m x 10 $\mu$m unit) obtained by equally longitudinally and laterally dividing the area of 200 $\mu$m x 200 $\mu$m by 20, wherein a Fe content of $\leq$ 1 wt% in the Si powder raw material component is excluded, and said sintered product comprises additionally compositions containing elements of Si, N, Al, O, Y, Zn and Fe, and when weights of raw materials, containing said elements, of Si, $Si_3N_4$, $Al_2O_3$, $Y_2O_3$, oxides of Zn and Fe are a, b, c, d, e and f respectively, the following expressions are fulfilled:

$$6 \leq 100(c+d+e)/(1,67a+b+c+d+e+f) \leq 12,0$$

$$1 \leq (c+d)/e$$

$$0,001 \leq 100e/(1,67a+b+c+d+e+f) \leq 7,5$$

$$0,02 \leq 100f/(1,67a+b+c+d+e+f) \leq 7,5$$

3. The silicon nitride based sintered product of one of claims 1 and 2, characterized in that the silicon nitride based sintered product includes at least one element selected out of Ca, Ni, Cu, Cr, Co, Mg, Mn, Sn, Ho, Cd, and Pb, in place of said Zn element.

**Patentansprüche**

1. Sinterprodukt auf Siliciumnitridbasis, das Eisen Fe, Yttrium Y und Aluminium Al aufweist bzw. enthält, dadurch gekennzeichnet, daß 0,005 bis 15 Gewichtsprozent von Fe-Verbundkörnern mit einer Korngröße von 0,2 μm oder mehr, die in dem Sinterprodukt auf Siliciumnitridbasis enthalten sind, 0,1 bis 15 % einer Fläche in einem zweidimensionalen Bereich von 200 x 200 μm besetzen, und daß die Fe-Verbundkörner 0,1 bis 15 % einer Fläche von Zellen (10 μm x 10 μm), die durch gleichmäßiges longitudinales und laterales Dividieren der Fläche von 200 μm x 200 μm durch 20 erzielt werden, besetzen, wobei ein Fe-Gehalt von ≤ 1 Gewichtsprozent in dem Si-Pulverbestandteil des Rohmaterials ausgeschlossen ist, und daß das gesinterte Produkt zusätzliche Verbindungen und/oder Zusammensetzungen aufweist, die Elemente aus Si, N, Al, O, Y, Zn und Fe enthalten, und daß, sofern Gewichte der Rohmaterialien aus Si, Si$_3$N$_4$, Al$_2$O$_3$, Y$_2$O$_3$, Oxide aus Zn und Fe, die diese Elemente enthalten, a, b, c, d, e und f entsprechend sind, die folgenden Ausdrücke erfüllt sind:

$$6 \leq 100 \, (c+d+e) / (1,67 \, a+b+c+d+e+f) \leq 12,0$$

$$1 \leq (c+d) / e$$

$$0,001 \leq 100 \, e / (1,67 \, a+b+c+d+e+f) \leq 7,5$$

$$0,02 \leq 100 \, f / (1,67 \, a+b+c+d+e+f) \leq 7,5$$

2. Sinterprodukt auf Siliciumnitridbasis, das Eisen Fe, Yttrium Y und Aluminium Al enthält, dadurch gekennzeichnet, daß 0,005 bis 15 Gewichtsprozent von Fe-Verbundkörnern, von denen mehr als 80 % der Gesamtzahl der Verbundkörner, die eine Fe-Komponente enthalten, eine Korngröße von 0,2 bis 4 μm aufweisen und eine Fläche von 35 % oder weniger durch die Verbundkörner, die Fe-Komponenten enthalten, in mehr als 80 % von Zellen (10 μm x 10 μm Einheit), die durch gleichmäßiges longitudinales und laterales Dividieren der Fläche von 200 μm x 200 μm durch 20 erzielt wird, besetzt sind, wobei ein Fe-Gehalt von ≤ 1 Gewichtsprozent des Si-Pulverkomponenten-Rohmaterials ausgeschlossen ist, und daß das gesinterte Produkt zusätzliche Verbindungen bzw. Zusammensetzungen aufweist, die Elemente aus Si, N, Al, O, Y, Zn und Fe enthalten, und daß, sofern die Gewichte des Rohmaterials von Si, Si$_3$N$_4$, Al$_2$O$_3$, Y$_2$O$_3$, Oxide von Zn und Fe, die diese Elemente enthalten, a, b, c, d, e und f jeweils sind, die folgenden Ausdrücke erfüllt sind:

$$6 \leq 100 \, (c+d+e) / (1,67 \, a+b+c+d+e+f) \leq 12,0$$

$$1 \leq (c+d) / e$$

$$0,001 \leq 100 \, e / (1,67 \, a+b+c+d+e+f) \leq 7,5$$

$$0,02 \leq 100 \, f / (1,67 \, a+b+c+d+e+f) \leq 7,5$$

3. Sinterprodukt auf Siliciumnitridbasis gemäß einem der Ansprüche 1 und/oder 2, dadurch gekennzeichnet, daß das Sinterprodukt auf Siliciumnitridbasis anstelle des Elements Zn wenigstens ein Element, das aus Ca, Ni, Cu, Cr, Co, Mg, Mn, Sn, Ho, Cd und Pb ausgewählt ist, enthält.

**Revendications**

1. Produit fritté à base de nitrure de silicium contenant du fer Fe, de l'yttrium Y et de l'aluminium Al, caractérisé en ce que 0,005 à 15 % en poids des grains du composé de Fe présente une taille de 0,2 μm ou plus, contenus dans le produit fritté à base de nitrure de silicium, occupent une surface de 0,1 à 15 % dans un intervalle bidimensionnel de 200 × 200 μm et les grains dudit composé de Fe occupent une surface de 0,1 à 15 % dans des cellules (10 μm × 10 μm) obtenues par une division aussi bien longitudinale que latérale de ladite surface de 200 μm × 200 μm par 20, où une teneur en Fe ≤1 % en poids dans la matière première la poudre de Si est exclue et ledit produit fritté comprend en plus des compositions contenant des éléments Si, N, Al, O, Y, Zn et Fe, et lorsque les poids des matières premières contenant lesdits éléments, Si, Si$_3$N$_4$, Al$_2$O$_3$, Y$_2$O$_3$, oxydes de Zn et Fe sont de a, b, c, d, e et f respectivement, les expressions ci-après sont remplies :

$$6 \leq 100(c+d+e)/(1,67a+b+c+d+e+f) \leq 12,0$$

$$1 \leq (c+d)/e$$

$$0,001 \leq 100e/(1,67a+b+c+d+e+f) \leq 7,5$$

$$0,02 \leq 100f/(1,67a+b+c+d+e+f) \leq 7,5$$

2. Produit fritté à base de nitrure de silicium contenant du fer Fe, de l'yttrium Y et de l'aluminium Al, caractérisé en ce que 0,005 à 15 % en poids des grains du composé de Fe ayant une taille de grains supérieure à 80 % de la totalité des grains de composé contenant le composant Fe présente une taille de 0,2 à 4 $\mu$m et lesdits grains du composé contenant le composant Fe occupent une surface de 35 % ou moins dans plus de 80 % de cellules (10 $\mu$m $\times$ 10 $\mu$m unité) obtenues par une division aussi bien longitudinale que latérale de ladite surface de 200 $\mu$m $\times$ 200 $\mu$m par 20, où une teneur en Fe $\leq$1 % en poids dans la matière première de poudre Si est exclue et ledit produit fritté comprend en plus des compositions contenant des éléments Si, N, Al, O, Y, Zn et Fe, et lorsque les poids des matières premières contenant lesdits éléments, Si, $Si_3N_4$, $Al_2O_3$, $Y_2O_3$, oxydes de Zn et Fe sont de a, b, c, d, e et f respectivement, les expressions ci-après sont remplies :

$$6 \leq 100(c+d+e)/(1,67a+b+c+d+e+f) \leq 12,0$$

$$1 \leq (c+d)/e$$

$$0,001 \leq 100e/(1,67a+b+c+d+e+f) \leq 7,5$$

$$0,02 \leq 100f/(1,67a+b+c+d+e+f) \leq 7,5$$

3. Produit fritté à base de nitrure de silicium selon l'une des revendications 1 et 2, caractérisé en ce que le produit fritté à base de nitrure de silicium comprend au moins un élément pris parmi Ca, Ni, Cu, Cr, Co, Mg, Mn, Sn, Ho, Cd et Pb à la place dudit élément Zn.

# F I G. 1

SILICON NITRIDE BASED SINTERED PRODUCT

CONTAINIG 0.02wt% OF Si

# F I G. 2

# FIG. 3

# FIG. 4

# F I G. 5

# F I G. 6